# EUROPEAN PATENT APPLICATION

(11) **EP 4 715 918 A1**
(43) Date of publication of application: **25.03.2026**
(21) Application number: 25198902.6
(22) Date of filing: 29.08.2025
(51) Int. Cl.: H01M 10/04, H01M 10/0587, H01M 50/107, H01M 50/166, B21D 19/00

(54) **APPARATUS AND METHOD FOR MANUFACTURING SECONDARY BATTERY**

(30) Priority: 19.09.2024 KR 20240126664
(71) Applicant: SAMSUNG SDI CO., LTD., Yongin-si, Gyeonggi-do 17084 (KR)
(72) Inventor: OH, Jaeseung, 17084 Yongin-Si, Gyeonggi-do (KR); YANG, Jiho, 17084 Yongin-Si, Gyeonggi-do (KR); UHM, Jushik, 17084 Yongin-Si, Gyeonggi-do (KR); CHO, Hyeong, 17084 Yongin-Si, Gyeonggi-do (KR)
(74) Representative: Bardehle Pagenberg Partnerschaft mbB Patentanwälte Rechtsanwälte

(57) **Abstract**

Provided are an apparatus and method for manufacturing a secondary battery. The apparatus for manufacturing a secondary battery may include an inserting part configured to support an upper portion of a case of the secondary battery, a pressurizing part configured to pressurize an outer surface of the case to form a beading part on the outer surface of the case during rotation of the case, a support part configured to support a lower portion of the case, and a gripper configured to selectively grip the case or release the grip of the case for rotation of the case.

## Description

### FIELD

Aspects of embodiments of the present disclosure relate to an apparatus and method for manufacturing a secondary battery.

### BACKGROUND

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

The above information disclosed in this Background section is for enhancement of understanding of the background of the present disclosure, and therefore, it may contain information that does not constitute related (or prior) art.

### SUMMARY

To solve the problems described herein, aspects of embodiments of the present disclosure provide an apparatus and method for manufacturing a secondary battery.

These and other aspects and features of the present disclosure will be described in or will be apparent from the following description of embodiments of the present disclosure.

To solve the technical problems, an apparatus for manufacturing a secondary battery according to an embodiment of the present disclosure may include an inserting part configured to support an upper portion of a case of the secondary battery, a pressurizing part configured to pressurize an outer surface of the case to form a beading part on the outer surface of the case during rotation of the case, a support part configured to support a lower portion of the case, and a gripper configured to selectively grip the case or release the grip of the case for rotation of the case.

According to an embodiment of the present disclosure, the gripper may include a first grip arm and a second grip arm facing the first grip arm, the first grip arm and the second grip arm may be configured to approach the outer surface of the case and grip the outer surface of the case, and the first grip arm and the second grip arm may be configured to retract from the outer surface of the case to release the grip of the outer surface of the case.

According to an embodiment of the present disclosure, the apparatus may further include a controller configured to control the inserting part, the pressurizing portion, and the gripper, wherein the controller may be configured to control the pressurizing part to pressurize the outer surface of the case and rotate the inserting part into which the upper portion of the case is inserted, so that the beading part is formed on the outer surface of the case.

According to an embodiment of the present disclosure, the controller may be configured to control the gripper to release the grip of the case before the rotation of the case.

According to an embodiment of the present disclosure, the support part may include a groove formed on an upper surface of the support part that comes into contact with a lower surface of the case, and wherein a terminal formed at the lower portion of the case may be inserted into the groove.

According to an embodiment of the present disclosure, the case may include an edge part formed on the lower surface of the case so as to have a step relative to the terminal, the support part may include a seating part formed on the upper surface of the support part that comes into contact with the lower surface of the case, so that the support part has a step relative to the groove, and the edge part may come into contact with the seating part and the terminal may not come into contact with the seating part and the groove.

According to an embodiment of the present disclosure, the seating part may include an outer wall surrounding the outer surface of the case.

According to an embodiment of the present disclosure, a diameter of the groove may be greater than a diameter of the terminal.

According to an embodiment of the present disclosure, a depth of the groove from the seating part may be greater than a protruding length of the groove from the edge part of the terminal.

According to an embodiment of the present disclosure, the apparatus may further include a motor part connected to the inserting part, wherein the controller may be configured to control the motor part to rotate the inserting part.

According to an embodiment of the present disclosure, the apparatus may further include an upper gear rotated by being joined to the inserting part, a lower gear rotated by being joined to the support part, a shaft part connecting the upper gear and the lower gear, and a motor part connected to the upper gear and/or the lower gear, wherein the controller may be configured to control the motor part to rotate the upper gear and the lower gear in a same direction.

According to an embodiment of the present disclosure, the apparatus may further include a product loading part configured to load the case into the support part and a product unloading part configured to unload the case from the support part.

To solve the technical problems, a method for manufacturing a secondary battery according to an embodiment of the present disclosure may include supporting, by a support part, a lower portion of a case of the secondary battery, supporting, by an inserting part, an upper portion of the case, releasing, by a gripper, a grip of the case for rotation of the case, pressurizing, by a pressurizing part, an outer surface of the case, and forming a beading part on the outer surface of the case by rotating the case.

According to an embodiment of the present disclosure, the gripper may include a first grip arm and a second grip arm facing the first grip arm, and the operation of supporting, by the support part, the lower portion of the case and supporting, by the inserting part, the upper portion of the case may include an operation in which the first grip arm and the second grip arm approach the outer surface of the case and grip the outer surface of the case.

According to an embodiment of the present disclosure, the operation of releasing, by the gripper, the grip of the case for the rotation of the case may include an operation in which the first grip arm and the second grip arm retract from the outer surface of the case to release the grip of the outer surface of the case.

According to an embodiment of the present disclosure, the support part may include a groove formed on an upper surface of the support part that comes into contact with a lower surface of the case, and a terminal formed at the lower portion of the case may be inserted into the groove.

According to an embodiment of the present disclosure, the case may include an edge part formed on the lower surface of the case so as to have a step relative to the terminal, the support part may include a seating part formed on the upper surface of the support part that comes into contact with the lower surface of the case, so that the support part has a step relative to the groove, and the edge part may come into contact with the seating part and the terminal may not come into contact with the seating part and the groove.

According to an embodiment of the present disclosure, the operation of forming the beading part on the outer surface of the case by rotating the case may include rotating the inserting part by a motor part connected to the inserting part.

According to an embodiment of the present disclosure, the operation of forming the beading part on the outer surface of the case by rotating the case may include rotating an upper gear connected to the inserting part and a lower gear connected to the support part in a same direction, and wherein the upper gear may be connected to the lower gear by a shaft, and the upper gear or the lower gear may be connected to a motor.

According to an embodiment of the present disclosure, the method may further include loading the case from a product loading part to the support part, and unloading the case from the support part to a product unloading part.

According to an embodiment of the present disclosure, the grip release of the case may be performed before the case is rotated. With this configuration, damage to the side appearance of the product that occurs in a case of manufacturing the beading part of the secondary battery may be eliminated and the quality may be improved.

According to an embodiment of the present disclosure, during the process of forming the bead part, the terminal of the case and the groove of the support part may not come into contact with each other. With this configuration, damage to the terminal may be prevented, and thus, the quality may be improved.

According to an embodiment of the present disclosure, the support part and the inserting part may have rotational power at the same time. With this configuration, friction occurring between the support part and the lower portion of the secondary battery in a case of forming the beading part of the secondary battery through the close rotation of the inserting part and the pressurizing part may be eliminated, foreign matters may be reduced, distortion of the case may be eliminated by applying the method of simultaneous rotation of the support part and the inserting part, and the molding quality may be improved.

However, aspects and features of the present disclosure are not limited to those described herein, and other aspects and features not mentioned will be clearly understood by a person skilled in the art from the detailed description, described herein.

### BRIEF DESCRIPTION OF THE DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings:
FIG. 1 illustrates an example of a secondary battery according to an embodiment of the present disclosure;
FIG. 2 illustrates an example of a cross-section of a secondary battery in one direction according to an embodiment of the present disclosure;
FIG. 3 illustrates a block diagram showing components of an apparatus for manufacturing a secondary battery according to an embodiment of the present disclosure;
FIG. 4 illustrates components of an apparatus for manufacturing a secondary battery according to an embodiment of the present disclosure;
FIG. 5 illustrates components of an apparatus for manufacturing a secondary battery according to an embodiment of the present disclosure;
FIG. 6 illustrates an example of a gripper according to an embodiment of the present disclosure;
FIG. 7 illustrates an example of a motor part, an upper gear, a lower gear, and a shaft part according to an embodiment of the present disclosure;
FIG. 8 illustrates an example of a motor part according to an embodiment of the present disclosure;
FIG. 9 illustrates a product beading part, a product unloading part, and a product loading part according to an embodiment of the present disclosure;
FIG. 10 illustrates an example of the product loading part according to an embodiment of the present disclosure; and
FIG. 11 illustrates a flowchart showing a method for manufacturing a secondary battery according to an embodiment of the present disclosure.

### DETAILED DESCRIPTION

Hereinafter, embodiments of the present disclosure will be described, in detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term to explain his/her invention in the best way.

The embodiments described in this specification and the configurations shown in the drawings are only some of the embodiments of the present disclosure and do not represent all of the technical ideas, aspects, and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

Secondary batteries are manufactured by inserting an electrode assembly into a case and then sealing a cap assembly. The secondary battery includes a beading part and a gasket part to seal the inside of the secondary battery and connect the electrode assembly and the electrode terminal. The beading part is a component that seals a gap between the cap assembly and the case of the secondary battery. The beading part maintains a seal so that the electrode assembly does not come into contact with the outside, and prevents the electrolyte inside the battery from leaking to the outside. In addition, the beading part contributes to effectively controlling gas or pressure that may occur inside the battery. In general, the beading part is a portion that uses physical bonding or welding methods to join the cap assembly and the case so as to provide a high seal and requires durability and stability. Furthermore, in a case where the connection between the battery case and the cap assembly is not properly made, the battery life may be shortened or safety issues may arise.

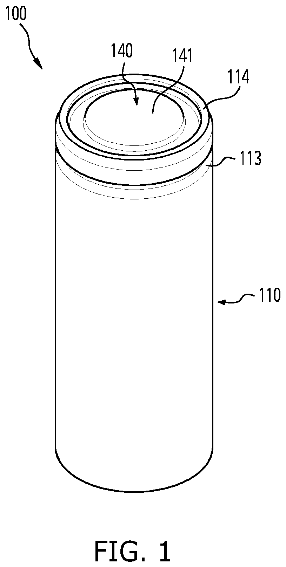

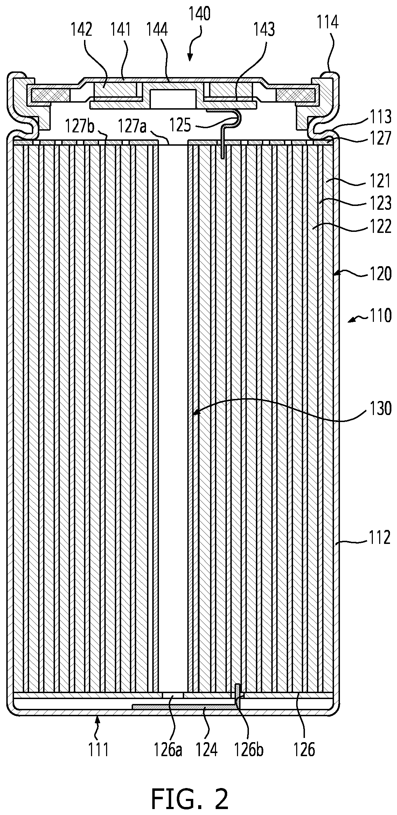

Hereinafter, a secondary battery that may be applied to various embodiments of the present disclosure will be described with reference to FIGS. 1 and 2.

FIG. 1 illustrates an example of a secondary battery according to an embodiment of the present disclosure. FIG. 2 illustrates an example of a cross-section of a secondary battery in one direction according to an embodiment of the present disclosure.

As shown in FIGS. 1 and 2, a cylindrical lithium ion secondary battery 100 according to one or more embodiments of the present disclosure may include a case 110, an electrode assembly 120, and a cap assembly 140. In addition, in some embodiments, the cylindrical lithium ion secondary battery 100 may include a center pin 130. In addition, in the secondary battery 100 according to one or more embodiments of the present disclosure, the cap assembly 140 may also perform a current interruption operation and, thus, may sometimes be referred to as a current interrupt device (CID).

The case 110 may have a substantially circular bottom part 111 and a cylindrical sidewall 112 upwardly extending (e.g., extending a predetermined length) from a circumference (or a periphery) of the bottom part 111. During the manufacturing process of the secondary battery 100, the top portion of the case 110 is open. Therefore, during the assembly process of the secondary battery 100, the electrode assembly 120 and the center pin 130 may be inserted into the case 110 together with an electrolyte. The case 110 may be made of, for example, steel, stainless steel, aluminum, aluminum alloy, or an equivalent thereof but is not limited to.

In addition, to prevent the cap assembly 140 from escaping to the outside (e.g., being separated from the case 110), with respect to the cap assembly 140, the case 110 may include a beading part (e.g., a bead) 113 recessed toward the inside at the bottom of the cap assembly 140 and a crimping part (e.g., a crimp) 114 bent inwardly at the top thereof.

The electrode assembly 120 may be accommodated inside the case 110. The electrode assembly 120 may include a negative electrode plate 121 coated with a negative electrode active material (e.g., graphite, carbon, etc.) on a negative electrode current collector plate, a positive electrode plate 122 coated with a positive electrode active material (e.g., a transition metal oxide, such as LiCoO₂, LiNiO₂, LiMn₂O₄, etc.) on a positive electrode current collector plate, and a separator 123 positioned between the negative electrode plate 121 and the positive electrode plate 122 to prevent a short circuit therebetween while allowing the movement of lithium ions therethrough. In addition, the negative electrode plate 121, the positive electrode plate 122, and the separator 123 may be wound in a substantially cylindrical shape. In one embodiment, the negative electrode current collector may be made of copper (Cu) foil, the positive electrode current collector may be made of aluminum (Al) foil, and the separator may be made of polyethylene (PE) or polypropylene (PP), but the present disclosure is not limited thereto.

In addition, a negative electrode tab 124 protruding and extending a certain length (e.g., a suitable length) downwardly from the electrode assembly 120 may be welded to the negative electrode plate 121, and a positive electrode tab 125 protruding and extending a certain length (e.g., a suitable length) upwardly from the electrode assembly 120 may be welded to the positive electrode plate 122, but an opposite configuration is possible. In addition, for example, the negative electrode tab 124 may be made of copper (Cu) or nickel (Ni), and the positive electrode tab 125 may be made of aluminum (Al), but the present disclosure is not limited thereto.

In addition, the negative electrode tab 124 of the electrode assembly 120 may be welded to the bottom part 111 of the case 110. Therefore, the case 110 may act as a negative electrode. Of course, alternatively, the positive electrode tab 125 may be welded to the bottom part 111 of the case 110, and in such an embodiment, the case 110 may act as a positive electrode.

In addition, the secondary battery 100 may include a first insulation plate 126 coupled to the case 110, may have a first hole 126a in the center and one or more second holes 126b outside (e.g., peripheral to the center) thereof, and may be interposed between the electrode assembly 120 and the bottom part 111. The first insulation plate 126 prevents the electrode assembly 120 from electrically contacting the bottom part 111 of the case 110. By way of example, the first insulation plate 126 prevents the positive electrode plate 122 of the electrode assembly 120 from electrically contacting the bottom part 111. The first hole 126a allows the gas to quickly move upwardly through the center pin 130 if (or when) a large amount of gas is generated due to an abnormality of the secondary battery 100, and the one or more second holes 126b allow the negative electrode tab 124 to penetrate (or extend) therethrough and be welded to the bottom part 111.

In addition, the secondary battery 100 may include a second insulation plate 127 coupled to the case 110, having a first hole 127a in the center and a plurality of second holes 127b formed outside thereof (e.g. located peripherally to the center), and may be interposed between the electrode assembly 120 and the cap assembly 140. The second insulation plate 127 prevents the electrode assembly 120 from electrically contacting the cap assembly 140. By way of example, the second insulation plate 127 prevents the negative electrode plate 121 of the electrode assembly 120 from electrically contacting the cap assembly 140. The first hole 127a allows the gas to quickly move toward the cap assembly 140 if (or when) a large amount of gas is generated due to an abnormality of the secondary battery, and the second holes 127b allow the positive electrode tab 125 to penetrate (or extend) therethrough and be welded to the cap assembly 140. In addition, the remaining second holes 127b allow an electrolyte to quickly flow into the electrode assembly 120 in an electrolyte injection process.

In addition, the diameters of the first holes 126a and 127a of the first and second insulation plates 126 and 127 are formed to be smaller than the diameter of the center pin 130, thereby preventing the center pin 130 from electrically contacting the bottom part 111 of the case 110 or the cap assembly 140 due to an external impact.

The center pin 130 has a shape of a hollow circular pipe and may be coupled to the center of the electrode assembly 120. The center pin 130 may be made of, for example, steel, stainless steel, aluminum, an aluminum alloy, or polybutylene terephthalate, but the present disclosure is not limited thereto. The center pin 130 suppresses (or prevents) deformation of the electrode assembly 120 during charging and discharging of the battery and acts as a passage for gas generated inside the secondary battery. Of course, in some embodiments, the center pin 130 may be omitted.

The cap assembly 140 may include a top plate 141, a middle plate 142, an insulation plate 143, and a bottom plate 144.

The middle plate 142 is located below the top plate 141 and may have a substantially flat shape.

When viewed from the bottom, the insulation plate 143 may be formed in a circular ring shape having a suitable width (e.g., a predetermined width). In addition, the insulation plate 143 insulates the middle plate 142 and the bottom plate 144 from each other. The insulation plate 143 may be interposed between, for example, the middle plate 142 and the bottom plate 144 to then be ultrasonically welded, but the present disclosure is not limited thereto.

The cylindrical lithium ion secondary battery that is applicable to various embodiments of the present disclosure has been described, but the present disclosure is not limited thereto. For example, various embodiments of the present disclosure are applicable to secondary batteries of various types or shapes as long as the secondary battery includes an electrode assembly, which is formed by winding a positive electrode plate, a negative electrode plate, and a separator, and a can accommodating the electrode assembly.

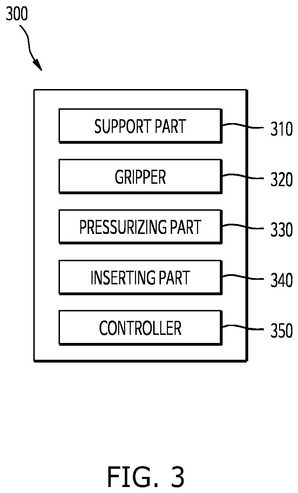

FIG. 3 illustrates a block diagram showing components of an apparatus 300 for manufacturing a secondary battery according to an embodiment of the present disclosure. Referring to FIG. 3, the apparatus 300 for manufacturing a secondary battery may include a support part 310, a gripper 320, a pressurizing part 330, an inserting part 340, and a controller 350.

The inserting part 340 may support the upper portion of the case. For example, the inserting part 340 may be joined to the case by pressurizing the upper portion of the case downward. The diameter of the inserting part 340 may be formed to be greater than the diameter of the upper portion of the case. A portion of the upper portion of the case may be inserted into the inserting part 340, so that the inserting part 340 may support the upper portion of the case.

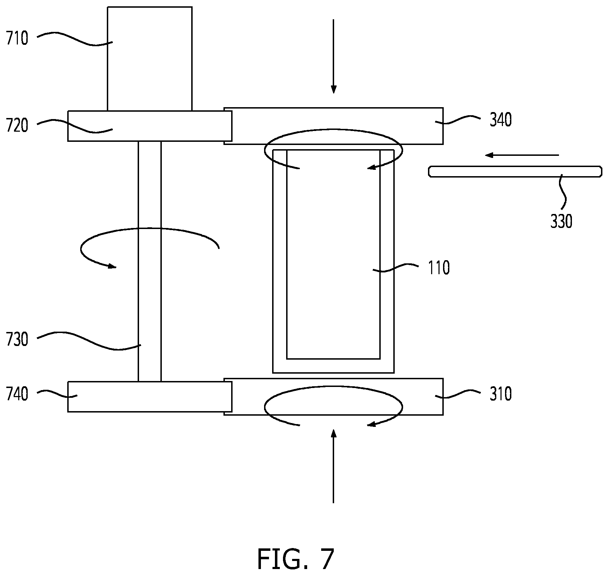

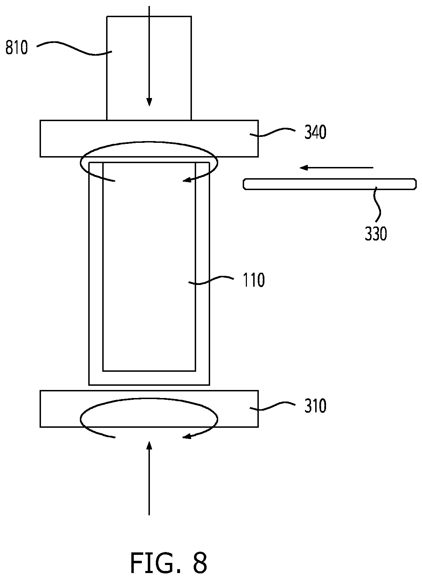

The inserting part 340 may rotate the case so as to form the beading part of the case. According to an embodiment, the inserting part 340 may be rotated by the motor part. The motor part is described herein, including, for example, with reference to FIGS. 7 and 8.

The pressurizing part 330 may form the beading part on the outer surface of the rotating case. The pressurizing part 330 may pressurize the side surface of the case in a vertical direction. The pressurizing part 330 may pressurize the side surface of the case in a vertical direction after the inserting part 340 pressurizes the upper portion of the case to fix the case.

According to an embodiment, in a state in which the inserting part 340 supports the upper portion of the case, the pressurizing part 330 may pressurize the side surface of the case at a height that does not horizontally overlap the inserting part 340. For example, in a case where the inserting part 340 supports the upper portion of the case, the pressurizing part 330 and the inserting part 340 may not come into contact with each other. In some embodiments, due to the rotation of the inserting part 340, the pressurizing part 330 may pressurize the side surface of the case after the case supported by the inserting part 340 starts to rotate. However, the present disclosure is not limited thereto, and the pressurizing part 330 may pressurize the side surface of the case before the inserting part 340 rotates the case.

The support part 310 may support the lower portion of the case. For example, the support part 310 may be joined to the case by pressurizing the lower portion of the case upward. The support part 310 has a cylindrical shape and the diameter of the support part 310 may be formed to be greater than the diameter of the case.

The case may be positioned between the support part 310 and the inserting part 340. Due to the rotation of the inserting part 340, the support part 310 joined to the case may also rotate in the same direction as the inserting part 340 as the case rotates. For example, the lower portion of the case may be joined to the support part 310, and a bearing may be positioned at the lower end of the support part 310. Due to the frictional force between the lower portion of the case and the support part 310, the support part 310 may be rotated in the same direction as the inserting part 340 and the case.

The gripper 320 may selectively grip the case or release the grip of the case for rotation of the case. The gripper 320 may grip the outer surface of the case. For example, the gripper 320 may grip the case before the case is positioned on the support part 310 and may release the grip of the case before the case rotates. With this configuration, damage to the side appearance of the product that occurs in a case of manufacturing the beading part of the case may be eliminated and the quality may be improved.

The controller 350 may control at least one of the support part 310, the gripper 320, the pressurizing part 330, and/or the inserting part 340. For example, the controller 350 may control at least one of the support part 310, the gripper 320, the pressurizing part 330, and/or the inserting part 340 to perform operations necessary to form the beading part on the outer surface of the case. The controller may control additional configurations for forming the beading part, in addition to the support part 310, the gripper 320, the pressurizing part 330, and the inserting part 340. For example, the controller 350 may control at least one of a motor part 710, an upper gear 720, a shaft part 730, and/or a lower gear 740 shown in FIG. 7.

For example, the controller 350 may control the pressurizing part 330 to pressurize the outer surface of the case and rotate the inserting part 340 into which the upper portion of the case is inserted, so that the beading part is formed on the outer surface of the case. The controller 350 may control the gripper 320 to release the grip of the case before the case rotates. In some embodiments, the controller 350 may control the inserting part 340 to grip the case before supporting the case. The controller 350 may additionally control at least one of the support part 310, the gripper 320, the pressurizing part 330, the inserting part 340, and the motor part to perform operations necessary to form the beading part on the outer surface of the case.

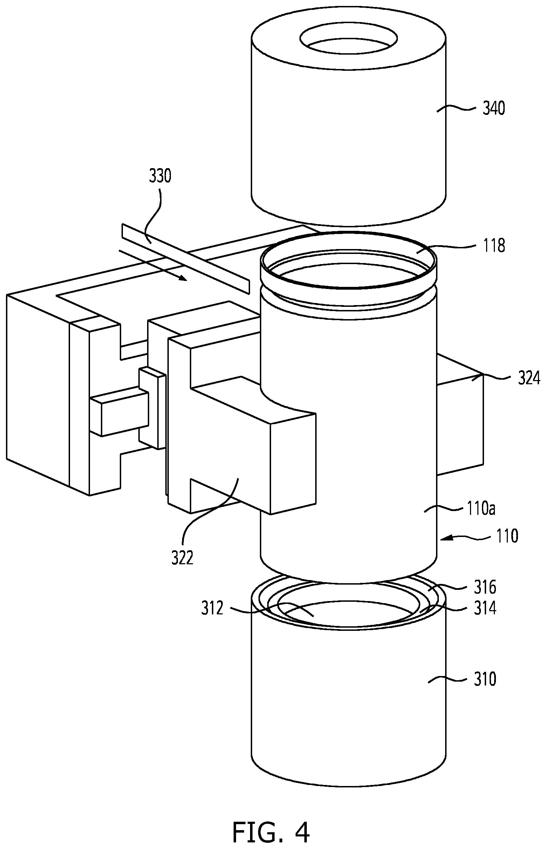

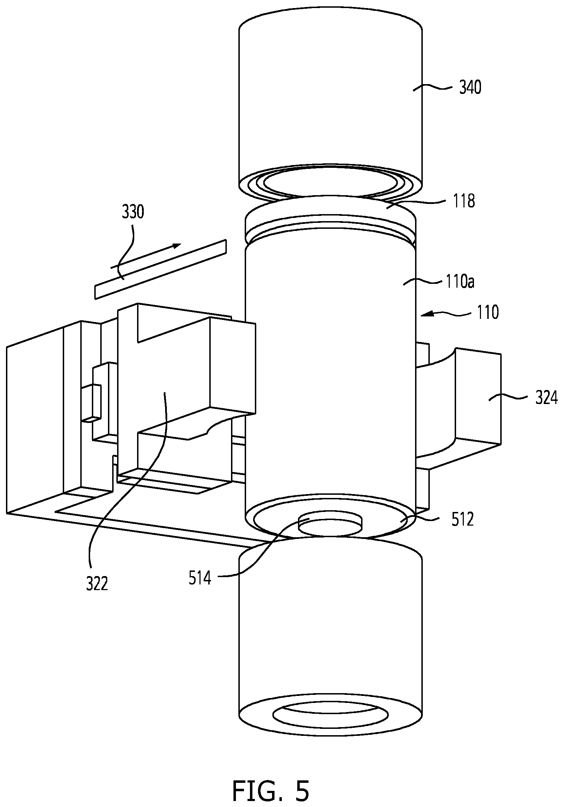

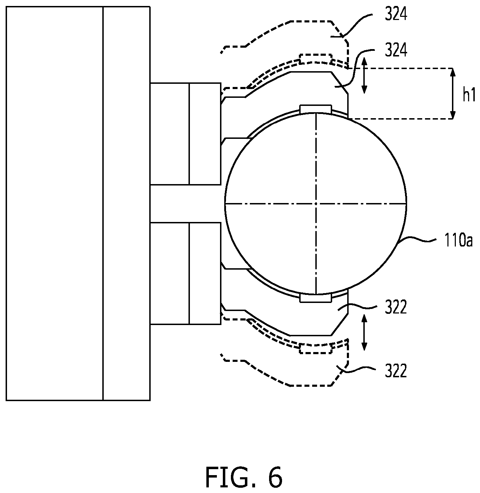

FIG. 4 illustrates components of the apparatus for manufacturing a secondary battery according to an embodiment of the present disclosure. FIG. 5 illustrates components of the apparatus for manufacturing a secondary battery according to an embodiment of the present disclosure. FIG. 6 illustrates an example of the gripper according to an embodiment of the present disclosure.

The gripper may include a first grip arm 322 and a second grip arm 324 facing the first grip arm 322. As shown in FIG. 4, the first grip arm 322 and the second grip arm 324 may approach an outer surface 110a of the case 110 and grip the outer surface 110a of the case 110. The first grip arm 322 and the second grip arm 324 may come into contact with the outer surface 110a of the case 110 so as to grip the case 110.

As shown in FIG. 5, the first grip arm 322 and the second grip arm 324 may be retracted from the outer surface 110a of the case 110 to release the grip of the outer surface 110a of the case 110. The first grip arm 322 and the second grip arm 324 may be spaced apart from the outer surface 110a of the case 110 so as to release the grip of the case 10. While the first grip arm 322 and the second grip arm 324 are in a grip-released state, the case 110 may be rotated so that the beading part may be formed on the outer surface 110a of the case 110.

The gripping operation and the grip-releasing operation of the first grip arm 322 and the second grip arm 324 are shown in FIG. 6. The first grip arm 322 and the second grip arm 324 indicated by solid lines show the operation of gripping the outer surface 110a of the case 110. The first grip arm 322 and the second grip arm 324 indicated by dashed lines show the operation of releasing the grip of the outer surface 110a of the case 110.

The first grip arm 322 and the second grip arm 324 may move in opposite directions so as to perform the grip or the grip release. The respective moving distances of the first grip arm 322 and the second grip arm 324 for performing the grip or the grip release may be defined as an opening/closing amount h1 of the grip arm. For example, the opening/closing amount of the first grip arm 322 may be the same as the opening/closing amount of the second grip arm 324. The opening/closing amount h1 may be adjusted according to the diameter of the upper or lower surface of the cylindrical case.

The pressurizing part 330 may pressurize the outer surface 110a of the case 110 in a direction perpendicular to the moving direction of the first grip arm 322 and the second grip arm 324. The pressurizing part 330 may pressurize the outer surface 110a of the case 110 between the inserting part 340 and the grip arms 322 and 324.

The pressurizing part 330 may move horizontally at a specific height of the case 110 in the vertical direction and apply pressure in a state of being in contact with the outer surface 110a of the case 110. For example, pressure may be applied before the case 110 starts to rotate, but the present disclosure is not limited thereto, and the pressurizing part 330 may start to apply pressure after the case 110 starts to rotate.

The case 110 may include an edge part 512 formed on the lower surface of the case 110 so as to have a step with a terminal 514. The terminal 514 may be formed to protrude from the edge part 512. The terminal 514 may be electrically connected to the electrode assembly accommodated in the case 110 and may have a polarity such as a negative electrode or a positive electrode.

The support part 310 may include a groove 312 formed on the upper surface of the support part 310 that comes into contact with the lower surface of the case 110, and the terminal 514 formed on the lower surface of the case 110 may be inserted into the groove 312.

The support part 310 may include a seating part 314 formed on the upper surface of the support part 310 that comes into contact with the lower surface of the case 110 so as to have a step with the groove 312. The edge part 512 may come into contact with the seating part 314, and the terminal 514 may not come into contact with the seating part 314 and the groove 312.

According to an embodiment, the diameter of the groove 312 may be greater than the diameter of the terminal 514. The depth from the seating part 314 of the groove 312 may be greater than the protruding length from the edge part 512 of the terminal 514. With this configuration, the terminal 514 and the groove 312 may not come into contact with each other and damage to the terminal 514 may be prevented, thereby improving quality of the secondary battery.

The seating part 314 may include an outer wall 316 surrounding the outer surface 110a of the case 110. The outer wall 316 may be formed in a circular shape and the diameter of the outer wall 316 may be formed to be greater than the diameter of the lower surface of the case 110. According to an embodiment, the outer wall 316 may not come into contact with the outer surface 110a of the case 110 so as to prevent damage to the outer surface 110a of the case 110. In the process in which the support part 310 supports the case 110, the outer wall 316 may guide the case 110.

The central axes of the inserting part 340, the case 110, and the support part 310 may coincide with each other. For example, the rotation shafts of the inserting part 340, the case 110, and the support part 310 may coincide with each other.

FIG. 7 illustrates an example of the motor part 710, the upper gear 720, the lower gear 740, and the shaft part 730 according to an embodiment of the present disclosure.

The apparatus for manufacturing a secondary battery according to an embodiment may further include the motor part 710, the upper gear 720, the shaft part 730, and the lower gear 740. For example, the apparatus for manufacturing a secondary battery as shown in FIG. 7 may further include the motor part 710, the upper gear 720, the shaft part 730, and the lower gear 740 in the apparatus for manufacturing a secondary battery as shown in FIGS. 3 to 5. The controller 350 may control the motor part 710, the upper gear 720, the shaft part 730, and the lower gear 740. A description of the configurations of FIG. 7 redundant with those described with reference to FIGS. 3 to 5 is omitted.

The upper gear 720 may be rotated by being joined to the inserting part 340. For example, the upper gear 720 may be positioned on one side of the inserting part 340 and joined to the side surface of the inserting part 340 in a manner suitable for a gear. The upper gear 720 may be rotated in a direction opposite to the rotation direction of the inserting part 340.

The lower gear 740 may be rotated by being joined to the support part 310. For example, the lower gear 740 may be positioned on one side of the support part 310 and joined to the side surface of the support part 310 in a manner suitable for a gear. The lower gear 740 may be rotated in a direction opposite to the rotation direction of the support part 310.

For example, gear wheels may be formed on the side surfaces of the upper gear 720 and the lower gear 740, and the shaft part 730 may connect the upper gear 720 and the lower gear 740. The shaft part 730 may connect the lower gear 740 and the upper gear 720 to transmit rotational power to each other. According to an embodiment, the shaft part 730, the upper gear 720, and the lower gear 740 may be rotated in the same direction. For example, the rotation direction of the shaft part 730 may be opposite to the rotation direction of the inserting part 340 and the support part 310. The shaft part 730 may be formed in a vertical direction relative to the ground and may be positioned vertically between the upper gear 720 and the lower gear 740. The shaft part 730 may connect the central parts of the upper gear 720 and the lower gear 740 to each other. In some embodiments, the shaft part 730 may be positioned so as not to overlap the path along which the pressurizing part 330 moves.

The motor part 710 may be connected to the upper gear 720 and/or the lower gear 740. The motor part 710 may comprise a servo motor, in some embodiments. The motor part 710 may be controlled by the controller 350 of FIG. 3 to rotate the upper gear 720 and/or the lower gear 740. The controller 350 may control the motor part 710 to rotate the upper gear 720 and the lower gear 740 in the same direction. The inserting part 340 and the support part 310 may be rotated in the same direction by the shaft part 730. Therefore, the inserting part 340 and the support part 310 may simultaneously rotate the case 110. By simultaneously driving the support part 310 and the inserting part 340, the friction occurring between the support part 310 and the lower portion of the secondary battery may be minimized or eliminated in a case of forming the beading part of the secondary battery through the pressurizing part 330. Due to this, foreign matters may be reduced, distortion of the case 110 may be eliminated, and molding quality may be improved.

FIG. 8 illustrates an example of a motor part 810 according to an embodiment of the present disclosure. The apparatus for manufacturing a secondary battery according to an embodiment may further include the motor part 810. For example, the apparatus for manufacturing a secondary battery as shown in FIG. 8 may further include the motor part 810 in the apparatus for manufacturing a secondary battery as shown in FIGS. 3 to 5. The controller 350 may control the motor part 810. A description of the configurations of FIG. 8 redundant with those described with reference to FIGS. 3 to 5 is omitted.

The motor part 810 may be connected to the inserting part 340 and the motor part 810 may rotate the inserting part 340 by the controller 350 of FIG. 3. The inserting part 340 may come into contact with the case 110 and rotate the case 110. The case 110 may come into contact with the support part 310 and rotate the support part 310. The bearing may be positioned at the lower end of the support part 310, so that the inserting part 340, the case 110, and the support part 310 may be rotated in the same direction.

By driving the inserting part 340 and not driving the support part 310, the apparatus for manufacturing a secondary battery may rotate the case 110 by using a simpler structure.

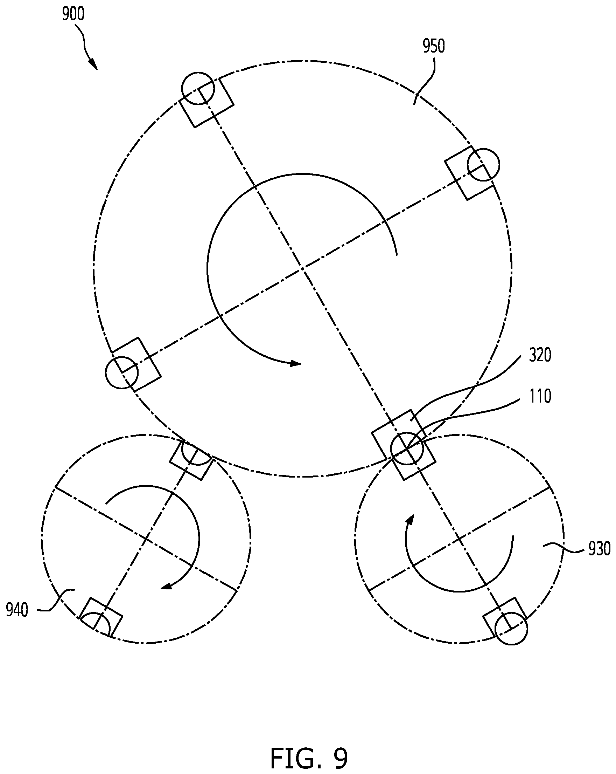

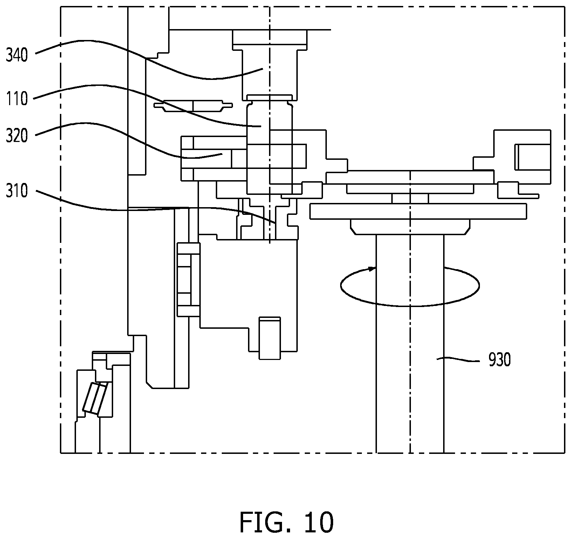

FIG. 9 illustrates a product beading part 950, a product unloading part 940, and a product loading part 930 according to an embodiment of the present disclosure. FIG. 10 illustrates an example of the product loading part 930 according to an embodiment of the present disclosure.

According to an embodiment, the apparatus for manufacturing a secondary battery may include the product loading part 930, the product unloading part 940, and the product beading part 950.

The product beading part 950 may include a configuration for forming the beading part on the outer surface 110a of the case 110. For example, the product beading part 950 may include the support part 310, the gripper 320, the pressurizing part 330, the inserting part 340, and the controller 350 described herein. In some embodiments, the product beading part 950 may further include the motor part 710, the upper gear 720, the shaft part 730, and the lower gear 740.

A plurality of support parts 310 and grippers 320 may be positioned around the product beading part 950. A configuration for forming the beading part in the case 110 may be additionally positioned in the product beading part 950. The product beading part 950 may sequentially receive the case 110, in which the beading part is not formed, from the product loading part 930 while rotating. In some embodiments, the product beading part 950 may unload the case 110, in which the beading part is formed, to the product unloading part 940 while rotating.

The product loading part 930 may load the case 110, in which the beading part is not formed, into the support part 310. The product unloading part 940 may unload the case 110, in which the beading part is formed by the product beading part 950, from the support part 310. The product loading part 930 and the product unloading part 940 may be controlled by the controller 350 of the product beading part.

A plurality of cases 110 in which the beading part is not formed may be positioned around the product loading part 930, and the cases 110 may be sequentially loaded into the product beading part 950 according to the rotation of the product loading part 930. A plurality of support parts 310 and grippers 320 may be positioned in the product beading part 950. The cases 110 positioned in the rotating product loading part 930 may be sequentially loaded into the support part 310 of the product beading part 950 that rotates together, so that the grippers 320 may grip the cases 110.

The product unloading part 940 may rotate to sequentially unload the cases 110, in which the beading part is formed, on the support part 310 of the product beading part 950. For example, the case 110 may be unloaded from the support part 310 of the product beading part 950 to the product unloading part 940.

Referring to FIG. 10, the product loading part 930 may be positioned vertically relative to the ground. The product loading part 930 may grip the outer surface of the case 110 and the product loading part 930 may be positioned to face the gripper 320 of the product beading part 950.

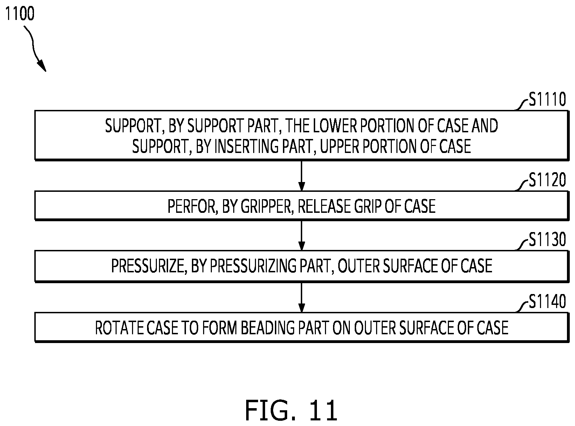

FIG. 11 illustrates a flowchart showing a method 1100 for manufacturing a secondary battery according to an embodiment of the present disclosure. Operations of the method for manufacturing a secondary battery, which are described in the embodiment of FIG. 11, may be performed sequentially or non-sequentially. For example, the order of the operations mentioned in the embodiment of FIG. 11 may be changed, or at least two operations may be performed in parallel. The operation performed at each step may be performed under the control of the controller 350 of FIG. 3.

In operation S1110, the method may be initiated by an operation of supporting, by the support part, the lower portion of the case. The inserting part may support the upper portion of the case. These operations may occur sequentially rather than simultaneously, depending on the process configuration. The gripper may include the first grip arm and the second grip arm facing the first grip arm. The first grip arm and the second grip arm may approach the outer surface of the case and grip the outer surface of the case.

The support part may include the groove formed on the upper surface of the support part that comes into contact with the lower surface of the case, and the terminal formed on the lower surface of the case may be inserted into the groove. The case may include the edge part formed on the lower surface of the case so as to have a step with the terminal. The support part may include the seating part formed on the upper surface of the support part that comes into contact with the lower surface of the case, so that the support part has a step with the groove. The edge part may come into contact with the seating part, and the terminal may not come into contact with the seating part and the groove.

In operation S1120, the gripper may release the grip of the case so as to rotate the case. The first grip arm and the second grip arm may be retracted from the outer surface of the case to release the grip of the outer surface of the case.

In operation S1130, the pressurizing part may pressurize the outer surface of the case. However, the pressurizing part may pressurize the outer surface of the case before the gripper releases the grip of the case.

In operation S1140, the case may be rotated to form the beading part on the outer surface of the case. However, the beading part may be formed on the outer surface of the case by rotating the case before the pressurizing part pressurizes the outer surface of the case. In addition, the gripper may rotate the case after releasing the grip of the case. The inserting part may be rotated by the motor part connected to the inserting part. In some embodiments, the upper gear connected to the inserting part and the lower gear connected to the support part may be rotated in the same direction, the upper gear may be connected to the lower gear by the shaft, and the upper gear or the lower gear may be connected to the motor.

The case may be loaded from the product loading part to the support part, and the case may be unloaded from the support part to the product unloading part. According to an embodiment, the product may be loaded from the product loading part to the support part before operation S1110, and the case may be unloaded from the support part to the product unloading part after operation S1140.

Although the present disclosure has been described above with respect to embodiments thereof, the present disclosure is not limited thereto. Various modifications and variations can be made thereto by those skilled in the art within the spirit of the present disclosure and the equivalent scope of the appended claims.

## Claims

1. An apparatus (300) for manufacturing a secondary battery, the apparatus (300) comprising:
an inserting part (340) configured to support an upper portion of a case (110) of the secondary battery;
a pressurizing part (330) configured to pressurize an outer surface (110a) of the case (110) to form a beading part (113) on the outer surface (110a) of the case (110) during rotation of the case (110);
a support part (310) configured to support a lower portion of the case (110); and
a gripper (320) configured to selectively grip the case (110) or release the grip of the case (110) for rotation of the case (110).

2. The apparatus (300) as claimed in claim 1, wherein the gripper (320) comprises a first grip arm (322) and a second grip arm (324) facing the first grip arm (322);
the first grip arm (322) and the second grip arm (324) are configured to approach the outer surface (110a) of the case (110) and grip the outer surface (110a) of the case (110); and
the first grip arm (322) and the second grip arm (324) are configured to retract from the outer surface (110a) of the case (110) to release the grip of the outer surface (110a) of the case (110).

3. The apparatus (300) as claimed in claim 1 or claim 2, further comprising a controller (350) configured to control the inserting part (340), the pressurizing portion (330), and the gripper (320), wherein the controller (350) is configured to control the pressurizing part (330) to pressurize the outer surface (110a) of the case (110) and rotate the inserting part (340) into which the upper portion of the case (110) is inserted, so that the beading part (113) is formed on the outer surface (110a) of the case (110).

4. The apparatus (300) as claimed in claim 3, wherein the controller (350) is configured to control the gripper (320) to release the grip of the case (110) before the rotation of the case (110).

5. The apparatus (300) of any one of the preceding claims, wherein the support part (310) comprises:
a groove (312) formed on an upper surface of the support part (310) that comes into contact with a lower surface of the case (110), and
wherein a terminal (514) formed at the lower portion of the case (110) is inserted into the groove (312).

6. The apparatus (300) as claimed in claim 5, wherein:
the case (110) comprises an edge part (512) formed on the lower surface of the case (110) so as to have a step relative to the terminal (514);
the support part (310) comprises a seating part (314) formed on the upper surface of the support part (310) that comes into contact with the lower surface of the case (110), so that the support part (310) has a step relative to the groove (312); and
the edge part (512) comes into contact with the seating part (314) and the terminal (514) does not come into contact with the seating part (314) and the groove (312).

7. The apparatus (300) as claimed in claim 6, wherein the seating part (314) comprises an outer wall (316) surrounding the outer surface (110a) of the case (110).

8. The apparatus (300) of any one of the preceding claims 5 to 7, wherein a diameter of the groove (312) is greater than a diameter of the terminal (514).

9. The apparatus (300) of any one of the preceding claims when combined with claim 6, wherein a depth of the groove (312) from the seating part (314) is greater than a protruding length of the groove (312) from the edge part (512) of the terminal (514).

10. The apparatus (300) of any one of the preceding claims when combined with claim 3, further comprising a motor part (810) connected to the inserting part (340), wherein the controller (350) is configured to control the motor part (810) to rotate the inserting part (340).

11. The apparatus (300) of any one of the preceding claims when combined with claim 3, further comprising:
an upper gear (720) rotated by being joined to the inserting part (340);
a lower gear (740) rotated by being joined to the support part (310);
a shaft part (730) connecting the upper gear (720) and the lower gear (740); and
a motor part (710) connected to the upper gear (720) and/or the lower gear (740), wherein the controller (350) is configured to control the motor part (710) to rotate the upper gear (720) and the lower gear (740) in a same direction.

12. The apparatus (300) of any one of the preceding claims , further comprising a product loading part (930) configured to load the case (110) into the support part (310) and a product unloading part (940) configured to unload the case (110) from the support part (310).

13. A method (1100) for manufacturing a secondary battery, the method comprising:
supporting, by a support part (310), a lower portion of a case (110) of the secondary battery;
supporting (S1110), by an inserting part (340), an upper portion of the case (110);
releasing (S1120), by a gripper (320), a grip of the case (110) for rotation of the case (110);
pressurizing (S1130), by a pressurizing part (330), an outer surface (110a) of the case (110); and
forming (S1140) a beading part (113) on the outer surface (110a) of the case (110) by rotating the case (110).

14. The method (1100) as claimed in claim 13, wherein the gripper (320) comprises a first grip arm (322) and a second grip arm (324) facing the first grip arm (322); and
the supporting, by the support part (310), of the lower portion of the case (110) and the supporting, by the inserting part (340), of the upper portion of the case (110) comprises an operation in which the first grip arm (322) and the second grip arm (324) approach the outer surface (110a) of the case (110) and grip the outer surface (110a) of the case (110).

15. The method (1100) as claimed in claim 14, wherein the releasing, by the gripper (320), of the grip of the case (110) for the rotation of the case (110) comprises an operation in which the first grip arm (322) and the second grip arm (324) retract from the outer surface (110a) of the case (110) to release the grip of the outer surface (110a) of the case (110).
